# FASCICULE DE BREVET EUROPEEN

(11) **EP 4 093 670 B1**
(45) Date de publication et mention de la délivrance du brevet: **08.11.2023**
(21) Numéro de dépôt: 21705584.7
(22) Date de dépôt: 19.01.2021
(51) Int. Cl.: B64C 11/26, B29C 70/48, B29C 70/86, B29C 70/24, B29D 99/00, B29C 70/44, F01D 5/28, F01D 5/30, B29L 31/00, B29L 31/08, B29L 31/30

(54) **AUBE COMPRENANT UNE STRUCTURE EN MATÉRIAU COMPOSITE ET PROCÉDÉ DE FABRICATION ASSOCIÉ**
SCHAUFEL MIT VERBUNDWERKSTOFFSTRUKTUR UND ZUGEHÖRIGES HERSTELLUNGSVERFAHREN
BLADE COMPRISING A COMPOSITE MATERIAL STRUCTURE AND ASSOCIATED MANUFACTURING METHOD

(30) Priorité: 20.01.2020 FR 2000527
(43) Date de publication de la demande: 30.11.2022
(73) Titulaire: SAFRAN AIRCRAFT ENGINES, 75015 Paris (FR)
(72) Inventeur: JOUDON, Vincent, 77550 MOISSY-CRAMAYEL (FR); COURTIER, Vivien Mickaël, 77550 MOISSY-CRAMAYEL (FR); POSTEC, Clément Pierre, 77550 MOISSY-CRAMAYEL (FR)
(74) Mandataire: Regimbeau
(86) Numéro de dépôt international: PCT/FR2021/050090
(87) Numéro de publication internationale: WO 2021/148750

(56) Documents cités:
- FR-A1- 3 080 322

## Description

### DOMAINE DE L'INVENTION

L'invention concerne une aube comprenant une structure en matériau composite.

L'invention concerne plus particulièrement, mais non exclusivement, une aube destinée à être utilisée dans un rotor de soufflante non-carénée de moteur d'aéronef (tel qu'un moteur de type « Open Rotor » dont la soufflante n'est pas carénée présentant deux hélices tournantes ou un moteur de type USF pour « Unducted Single Fan » présentant un aubage mobile et un aubage fixe ou un turbopropulseur présentant une architecture avec une seule hélice) ou dans un rotor d'éolienne.

### ETAT DE LA TECHNIQUE

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

De plus, ces moteurs comprennent généralement un mécanisme permettant de modifier l'angle de calage des aubes afin d'adapter la poussée générée par la soufflante en fonction des différentes phases de vol.

Cependant, la conception de telles aubes nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tend vers une augmentation du taux de dilution (BPR), ce qui se traduit par une augmentation du diamètre externe, et donc de l'envergure de ces aubes.

D'un autre côté, il est également nécessaire de garantir une résistance aux contraintes mécaniques pouvant s'exercer sur ces aubes tout en limitant leur signature acoustique.

Par ailleurs, sur les architectures de turbomachines à soufflante non-carénée, le démarrage du moteur est généralement effectué avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, complètement décollé, qui génère une excitation vibratoire large bande. En particulier sur des aubes à large corde et de grande envergure, l'effort de flexion est intense, bien que le régime moteur ne soit pas maximal.

En fonctionnement normal, durant les phases au sol et en vol, le calage est modifié (l'angle de calage est plus fermé). L'écoulement aérodynamique est donc parfaitement sain (recollé au profil aérodynamique). Les sollicitations large bande disparaissent, le régime de rotation étant plus élevé, et l'effort de flexion est maitrisé.

Actuellement, ces aubes sont généralement réalisées en matériau métallique. Si les aubes en matériau métallique ont une bonne résistance mécanique, elles présentent toutefois l'inconvénient d'avoir une masse relativement importante.

Afin de réduire cette masse, il est souhaitable de pouvoir fabriquer ces aubes en matériau composite. Toutefois, les efforts aérodynamiques intenses auxquelles ces aubes seraient soumises risqueraient d'endommager l'aube et/ou le moyeu dans la zone d'interface entre ces aubes et le moyeu du rotor de la soufflante. Ce problème se pose plus particulièrement lorsque les aubes sont reliées au moyeu par le biais d'attaches brochées en raison des niveaux vibratoires sur les ordres moteur 1N, 2N et 3N.

Le document FR 3 080 322 déposé au nom du demandeur décrit notamment une aube comprenant une structure en matériau composite, cette structure comprenant une partie de pale à profil aérodynamique et une partie de pied d'aube, la partie de pied d'aube comprenant deux portions reliées chacune à la partie de pale.

### EXPOSE DE L'INVENTION

Un but de l'invention est de proposer une aube incluant un matériau composite, adaptée pour être utilisée avec un mécanisme de calage variable et dans un environnement du type « Open Rotor », tout en étant capable de résister à des efforts aérodynamiques intenses, sous la contrainte d'un encombrement limité et d'une masse minimale.

Il est à cet effet proposé, selon un premier aspect de l'invention une aube comprenant :
- une structure en matériau composite comprenant un renfort fibreux obtenu par tissage tridimensionnel et une matrice dans laquelle est noyé le renfort fibreux, la structure en matériau composite comprenant une partie de pale à profil aérodynamique et une partie de pied d'aube, la partie de pied d'aube comprenant deux portions reliées chacune à la partie de pale,
- une pièce d'attache de pied d'aube comprenant une paroi délimitant une cavité et une ouverture formée dans la paroi, la structure en matériau composite s'étendant à travers l'ouverture de telle sorte que la partie de pale est située à l'extérieur de la pièce d'attache et la partie de pied d'aube est située à l'intérieur de la cavité, la pièce d'attache de pied d'aube comprenant en outre un épaulement, s'étendant dans la cavité depuis la paroi
- une embase disposée dans la cavité, ladite embase comprenant un support configuré pour venir en butée contre l'épaulement de la pièce d'attache de pied d'aube et un passage formé dans le support, les portions de la partie de pied d'aube de la structure en matériau composite s'étendant à travers le passage, et
- une pièce de blocage disposée dans la cavité entre les deux portions de la partie de pied d'aube, de sorte que chaque portion de la partie de pied d'aube se trouve plaquée par la pièce de blocage contre le support.

Certaines caractéristiques préférées mais non limitatives de l'aube selon le premier aspect sont les suivantes, prises individuellement ou en combinaison :
- l'aube comprend en outre une mousse expansive disposée dans la cavité entre l'embase et l'ouverture.
- une extrémité de chacune des portions de la partie de pied d'aube est repliée sous la pièce de blocage ou placée contre une face inférieure de l'embase.
- l'aube comprend en outre un couvercle appliqué contre les extrémités des portions de la partie de pied d'aube et configuré pour être fixé sur la pièce d'attache de sorte à bloquer lesdites portions et la pièce de blocage.
- le renfort fibreux comprend une portion de renfort fibreux de pale et deux portions de renfort fibreux de pied d'aube, et dans laquelle les portions de renfort fibreux de pied d'aube sont chacune tissées de manière continue avec la portion de renfort fibreux de pale, les deux portions de renfort fibreux de pied d'aube étant séparées par une zone de déliaison obtenue lors du tissage tridimensionnel du renfort fibreux.
- des flancs du support qui délimitent le passage sont inclinés de sorte que le passage est divergeant dans la direction d'une deuxième ouverture de la pièce d'attache, la deuxième ouverture étant située sous la partie de pied d'aube, d'un côté opposé de la pièce d'attache par rapport à l'ouverture.

Selon un deuxième aspect, l'invention propose un procédé de fabrication d'une aube selon le premier aspect décrit ci-dessus à partir d'un renfort fibreux obtenu par tissage tridimensionnel, le renfort fibreux comprenant une portion de renfort fibreux de pale et deux portions de renfort fibreux de pied d'aube, le procédé comprenant des étapes de :
S2 : réalisation de la pièce d'attache de pied d'aube de sorte à former la cavité et l'épaulement,
S3 : placement de l'embase dans la pièce d'attache contre l'épaulement,
S4 : placement du renfort fibreux dans la pièce d'attache de pied d'aube à travers l'ouverture de telle sorte que la portion de renfort fibreux de pale est située à l'extérieur de la pièce d'attache et les deux portions de renfort fibreux de pied d'aube sont situées à l'intérieur de la cavité,
S5 : insertion de la pièce de blocage dans la cavité entre les deux portions de renfort de pied d'aube, de sorte que chaque portion de la partie de pied d'aube se trouve plaquée par la pièce de blocage contre le support,
S9 : placement du renfort fibreux, de la pièce d'attache, de l'embase et de la pièce de blocage dans un moule,
S10 : injection de matière plastique dans le moule de manière à former la structure en matériau composite comprenant le renfort fibreux et une matrice dans laquelle est noyé le renfort fibreux.

Certaines caractéristiques préférées mais non limitatives du procédé selon le deuxième aspect sont les suivantes, prises individuellement ou en combinaison :
- le procédé comprend en outre, préalablement à l'étape S10 d'injection de matière plastique, une étape S7 d'injection d'une mousse expansive dans la cavité entre l'épaulement et l'ouverture.
- le procédé comprend en outre, après l'étape S5 d'insertion de la pièce de blocage, une étape S6 de mise en position d'une extrémité des portions de renfort fibreux de pied d'aube sous la pièce de blocage ou contre une face inférieure de l'embase et de fixation d'un couvercle contre lesdites extrémités pour maintenir la pièce de blocage en appui contre les deux portions de renfort fibreux de pied d'aube.

Selon un troisième aspect, l'invention propose un moteur à turbine à gaz comprenant une soufflante, la soufflante comprenant un moyeu et des aubes s'étendant radialement à partir du moyeu, les aubes étant conformes au premier aspect, chaque aube étant montée rotative par rapport au moyeu autour d'un axe de calage respectif, le moteur comprenant en outre un mécanisme d'actionnement propre à être commandé pour faire tourner les aubes autour de leurs axes de calage de manière à modifier l'angle de calage des aubes.

Selon un quatrième aspect, l'invention propose un aéronef comprenant un moteur à turbine à gaz selon le troisième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente de manière schématique un exemple de moteur incluant une soufflante non-carénée,
La figure 2 représente de manière schématique une aube de soufflante et un mécanisme d'actionnement permettant de modifier l'angle de calage des aubes de la soufflante,
La figure 3A représente de manière schématique une aube de soufflante conforme à un premier mode de réalisation de l'invention,
La figure 3B représente de manière schématique une aube de soufflante conforme à un deuxième mode de réalisation de l'invention,
La figure 3C représente de manière schématique une aube de soufflante conforme à un troisième mode de réalisation de l'invention,
La figure 4 représente de manière schématique une structure en matériau composite faisant partie de l'aube,
Les figures 5 à 8 illustrent de manière schématique des étapes d'un procédé de fabrication d'un exemple de réalisation d'un renfort fibreux pour une aube conforme à un mode de réalisation de l'invention.
La figure 9 est un organigramme d'étapes d'un procédé selon un mode de réalisation de l'invention.

Sur l'ensemble des figures, les éléments similaires portent des références identiques.

### DESCRIPTION DETAILLEE DE L'INVENTION

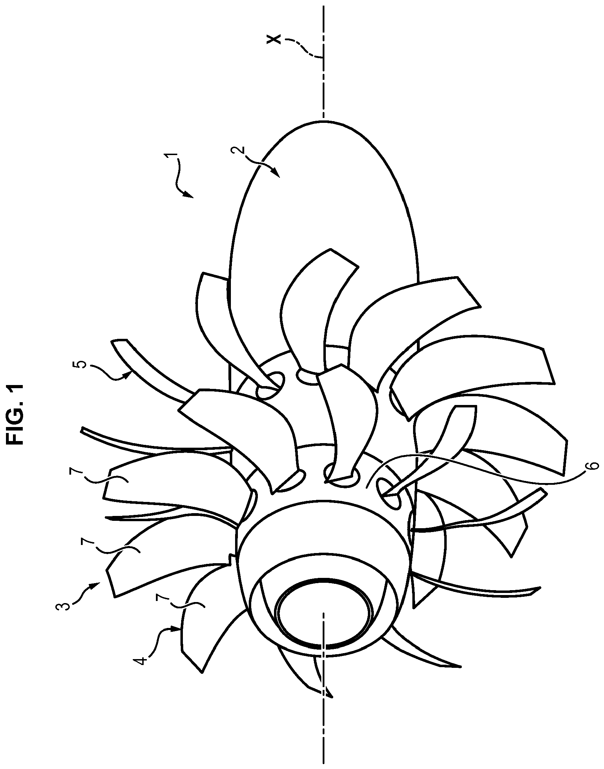

Sur la figure 1, le moteur 1 représenté est un moteur de type « Open Rotor », en configuration couramment qualifiée de « pusher » (i.e. la soufflante non-carénée est placée à l'arrière du générateur de puissance avec une entrée d'air située sur le côté, à droite sur la figure 1).

Le moteur comprend une nacelle 2 destinée à être fixée à un fuselage d'un aéronef, et une soufflante 3 non-carénée. La soufflante 3 comprend deux rotors de soufflante contrarotatifs 4 et 5. Autrement dit, lorsque le moteur 1 est en fonctionnement, les rotors 4 et 5 sont entrainés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor » en configuration « pusher » à rotors de soufflante contrarotatifs. Cependant, l'invention n'est pas limitée à cette configuration. L'invention s'applique également à des moteurs de type « Open Rotor » en configuration « puller » (i.e. la soufflante est placée en amont du générateur de puissance avec une entrée d'air située avant, entre ou juste derrière les deux rotors de soufflante).

En outre, l'invention s'applique également à des moteurs présentant des architectures différentes, telles qu'une architecture comprenant un rotor de soufflante comprenant des aubes mobiles et un stator de soufflante comprenant des aubes fixes, ou bien un unique rotor de soufflante.

L'invention est applicable à des architectures de type turbopropulseur (comprenant un unique rotor de soufflante).

Sur la figure 1, chaque rotor de soufflante 4, 5 comprend un moyeu 6 monté rotatif par rapport à la nacelle 2 et une pluralité d'aubes 7 fixées au moyeu 6. Les aubes 7 s'étendent sensiblement radialement par rapport à l'axe de rotation X du moyeu.

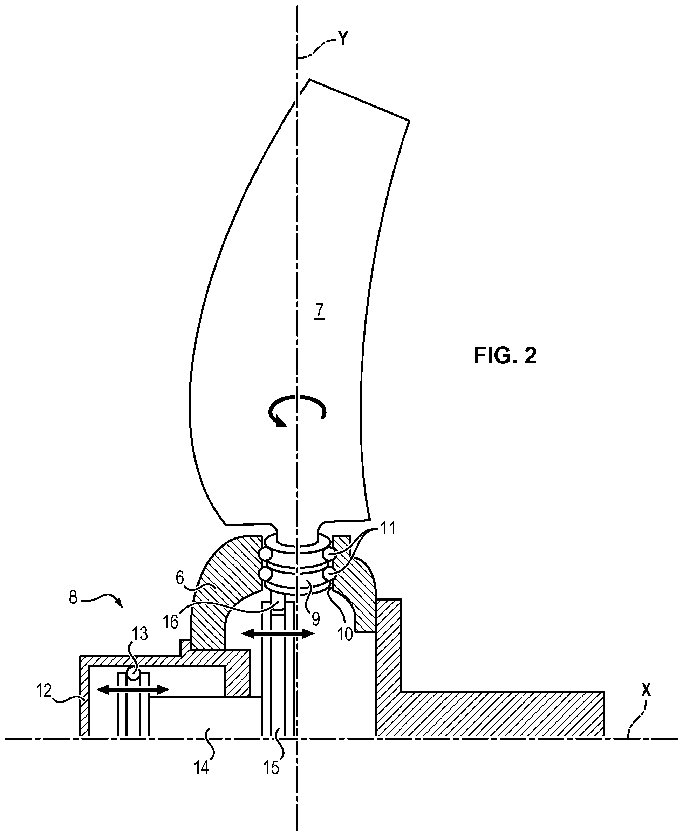

Comme illustré sur la figure 2, la soufflante 3 comprend en outre un mécanisme d'actionnement 8 permettant de modifier collectivement l'angle de calage des aubes des rotors, afin d'adapter les performances du moteur aux différentes phases de vol. A cet effet, chaque aube 7 comprend une pièce d'attache 9 disposée en pied d'aube. La pièce d'attache 9 est montée rotative par rapport au moyeu 6 autour d'un axe de calage Y. Plus précisément, la pièce d'attache 9 est montée rotative à l'intérieur d'un logement 10 ménagé dans le moyeu 6, par l'intermédiaires de billes 11 ou d'autres éléments roulants.

Le mécanisme d'actionnement 8 comprend un actionneur 13 comprenant un corps 12 fixé au moyeu 6 et une tige 14 propre à être entrainée en translation par rapport au corps 12. Le mécanisme d'actionnement 8 comprend en outre une glissière annulaire 15 montée solidaire de la tige 14 et un pion 16 monté solidaire de la pièce d'attache 9. Le pion 16 est propre à coulisser dans la glissière 15 et à tourner par rapport à la glissière 15, de manière à convertir un mouvement de translation de la tige 14 est un mouvement de rotation de la pièce d'attache 9, et par conséquent un mouvement de rotation de l'aube 7 par rapport au moyeu 6 autour de son axe de calage Y.

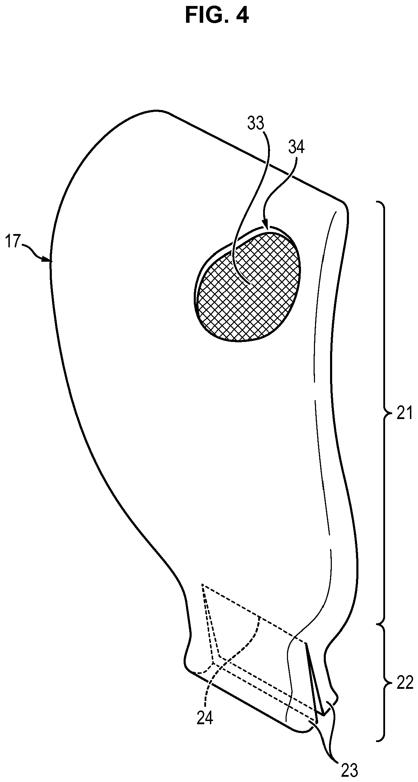

L'aube de soufflante 7 (figure 2) comprend une structure en matériau composite 17 (figure 4), une pièce d'attache 7 du pied de l'aube 7, une embase de rétention 18 et une pièce de blocage 19.

La structure en matériau composite 17 comprenant un renfort fibreux 33 obtenu par tissage tridimensionnel et une matrice 34 dans laquelle est noyé le renfort fibreux 33.

Le renfort fibreux peut être formé à partir d'une préforme fibreuse en une seule pièce obtenue par tissage tridimensionnel ou multicouche avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide, ou une matrice en carbone. L'aube 7 est alors formée par moulage au moyen d'un procédé d'injection sous vide de résine du type RTM (pour « Resin Transfer Molding), ou encore VARTM (pour Vacuum Resin Transfer Molding).

Le renfort fibreux 33 est tissé de telle sorte qu'il comprend des fils de chaine qui s'étendent continument à la fois à l'intérieur de la partie de pale à profil aérodynamique 21 et à l'intérieur de la partie de pied d'aube 22.

La matrice 34 qui enrobe les fils du renfort fibreux 33 est formée en matière plastique, par exemple une résine type époxy.

La structure en matériau composite 17 comprend une partie de pale 21 à profil aérodynamique et une partie de pied d'aube 22. La partie de pale 21 à profil aérodynamique est propre à être placée dans un flux d'air, lorsque le moteur est en fonctionnement, afin de générer une portance. La partie de pied d'aube 22 est destinée à permettre la fixation de la structure en matériau composite 17 à la pièce d'attache 9.

La partie de pied d'aube 22 comprend deux portions 23 reliées de manière continue à la partie de pale 21 au niveau d'une zone de jonction 24. Dans une forme de réalisation, chaque portion 23 présente une épaisseur qui augmente lorsqu'on parcourt la portion 23 en s'éloignant de la partie de pale 21 à profil aérodynamique.

La pièce d'attache 9 est formée en métal, par exemple en acier martensitique. La pièce d'attache 9 comprend une paroi présentant une surface externe ayant une forme de révolution. La surface externe présente deux gorges circulaires 27 propres à former des chemins de roulement pour des billes ou d'autres éléments roulants.

La paroi de la pièce d'attache 9 délimite une cavité configurée pour loger la partie de pied d'aube 22 de la structure en matériau composite 17. La paroi présente une première ouverture en forme générale de rectangle à travers laquelle s'étend la structure en matériau composite 17 de telle sorte que la partie de pale 21 est située à l'extérieur de la pièce d'attache 9. La pièce d'attache 9 présente en outre une deuxième ouverture 30, plus large que la première ouverture et située sous la partie de pied d'aube 22, d'un côté opposé de la pièce d'attache 9 par rapport à la première ouverture. Le cas échéant, cette deuxième ouverture 30 peut être circulaire.

La pièce d'attache 9 comprend en outre un épaulement 10 s'étendant dans la cavité depuis la paroi. L'épaulement 10 s'étend le long de la périphérie interne de la paroi, soit de manière continue, soit de manière discontinue.

L'embase de rétention 18 et la pièce de blocage 19 sont également disposées à l'intérieur de la cavité.

L'embase 18 comprend un support configuré pour venir en butée contre l'épaulement 10 de la pièce d'attache 9 et un passage 39 formé dans le support propre à recevoir les portions 23 de la partie de pied d'aube 22 de la structure en matériau composite. Dans une forme de réalisation, l'embase 18 est une bague dont la périphérie externe correspond à la périphérie interne de la pièce d'attache 9, de sorte que, lorsque la bague est en appui contre l'épaulement 10, sa périphérie externe est en contact avec la périphérie interne de la pièce d'attache d'aube 9.

L'embase 18 est formée en métal, par exemple en acier martensitique, en aluminium ou en titane.

La pièce de blocage 19 est placée entre les deux portions 23 de la partie de pied d'aube 22 de sorte à maintenir les deux portions 23 de la partie de pied d'aube 22 écartées l'une de l'autre. La pièce de blocage 19 est en butée contre la zone de jonction 24 de la partie de pied d'aube 22 de sorte que chaque portion 23 de la partie de pied d'aube 22 se trouve plaquée par la pièce de blocage 19 contre le support.

Ainsi, lorsque la partie de pied d'aube 22 est placée dans la pièce d'attache d'aube 9, les portions 23 sont enserrées entre les flancs du support et la pièce de blocage 19. Les deux portions 23 de la partie de pied d'aube 22 sont donc écartées l'une de l'autre par la pièce de blocage 19 et plaquées contre les flancs pour s'opposer à un retrait de la partie de pied d'aube 22 de la cavité via l'ouverture.

Afin de renforcer le serrage, les flancs du support qui délimitent le passage 39 peuvent être inclinés, c'est-à-dire que le passage 39 diverge de la face supérieure 38a du support (qui correspond à la face 38a du support propre à venir en butée contre l'épaulement 10) en direction de la face inférieure 38b (qui est opposée à la face supérieure 38a). Les flancs peuvent être sensiblement plats.

Avantageusement, le blocage des portions 23 de la partie de pied d'aube 22 avec l'utilisation d'une embase 18 et d'une pièce de blocage 19 permet d'exploiter les avantages d'une attache du type poignard (montage radial dans le moyeu) tout en conservant la reprise des efforts centrifuges via des portées (les flancs du support) spécifiques d'une attache brochée.

Le cas échéant, la jonction entre la face inférieure 38b et le flanc peut être biseautée ou émoussée pour éviter tout endommagement de la structure en matériau composite 17.

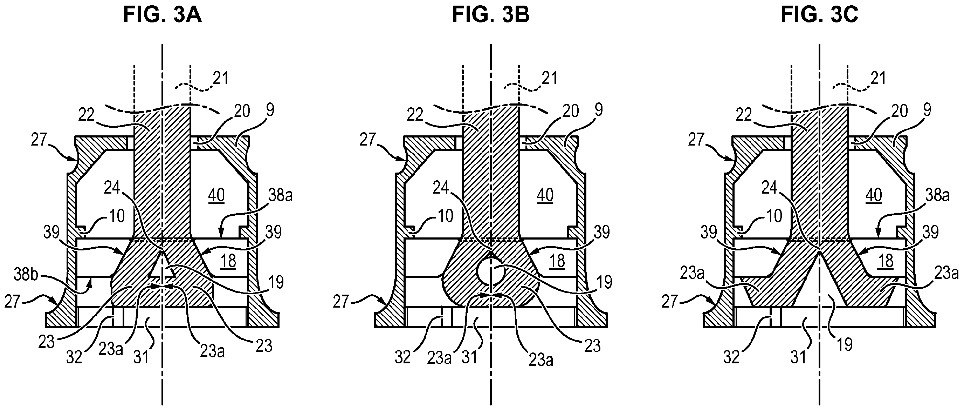

La pièce de blocage peut présenter toute forme adaptée pour permettre le serrage des portions 23 contre les flancs du support. Par exemple, comme illustré sur les figures 3A et 3C, la pièce de blocage peut avoir une forme prismatique dont les angles aux sommets sont tels que les faces du prisme sont sensiblement parallèles aux flancs lorsque la pièce de blocage 19 est placée dans la pièce d'attache 9. En variante, comme illustré sur la figure 3B, la pièce de blocage peut avoir une forme sensiblement cylindrique de révolution.

L'aube de soufflante 7 comprend en outre un couvercle 31 propre à être fixé sur la pièce d'attache 9 de sorte à exercer sur la pièce de blocage 19 une force qui tend à presser la pièce de blocage 19 contre les portions de pied d'aube 23 et à les plaquer contre le support. Lorsque le couvercle 31 est fixé sur la pièce d'attache 9, il obture la deuxième ouverture 30. Ainsi, lorsque la deuxième ouverture est circulaire, le couvercle peut notamment être fixé par vissage sur la pièce d'attache 9.

Au moins un trou traversant 32 est en outre formé dans le couvercle afin de permettre l'injection de la matrice pour enrober le renfort fibreux de la structure en matériau composite 17.

Le couvercle 31 est préférentiellement en métal, par exemple en acier martensitique, en aluminium ou en titane.

Dans une première forme de réalisation, l'extrémité 23a de chacune des portions 23 de la partie de pied d'aube 22 est repliée sous la pièce de blocage 19. La pièce de blocage 19 est donc logée dans les portions 23 et n'entre pas en contact direct avec le couvercle 31. La fixation du couvercle 31 sur la pièce d'attache 9 a donc pour effet de comprimer l'extrémité 23a des portions 23 contre la pièce de blocage 19.

Dans une deuxième forme de réalisation, l'extrémité 23a de chacune des portions 23 de la partie de pied d'aube 22 est pliée vers l'extérieur de sorte à s'étendre sous la face inférieure 38b du support, en direction de la paroi de la pièce d'attache 9. La pièce de blocage 19 entre alors en contact avec le couvercle 31 tandis que les portions 23 sont pincées entre le couvercle 31 et le support de l'embase 18.

Quelle que soit la forme de réalisation, les portions 23 de la partie de pied d'aube 22 sont bloquées en position par le couvercle 31. Aucun mouvement n'est donc possible pour les portions 23 dans la pièce d'attache 9 grâce d'une part à leur blocage par le couvercle 31 et d'autre part à leur plaquage contre le support de l'embase 18 par la pièce de blocage 19.

Une mousse 40 expansive est en outre injectée dans la cavité de la pièce d'attache 9 entre la première ouverture et l'embase 18 afin d'assurer le positionnement de la structure en matériau composite 17 lors du procédé d'injection et de reprendre les efforts transverses appliqués à l'aube 7. La mousse 40 permet ainsi de remplir la partie supérieure de la cavité et de rigidifier la partie de pied d'aube 22 qui s'étend à partir de la zone de jonction 24 en direction de la partie de pale à profil aérodynamique 21, sans pour autant avoir un impact trop important sur la masse de l'aube 7. En particulier, l'injection de la mousse expansive 40 participe à empêcher tout mouvement de la partie de pied d'aube 22 dans la pièce d'attache 9, supprimant ainsi les frottements et donc les endommagements précoces par fatigue vibratoire que l'on observe habituellement dans les Open Rotor sur les attaches brochées.

La mousse 40 peut notamment appartenir à au moins l'une des familles suivantes : mousse polyuréthane, mousse phénolique, mousse polystyrène.

L'aube 7 comprend en outre un joint 20 placé dans la première ouverture, entre la structure en matériau composite 17 et le bord de la première ouverture qui entoure la structure en matériau composite 17. Le joint 20 permet de combler le jeu subsistant entre la structure en matériau composite 17 et la pièce d'attache 9.

Le joint peut notamment comprendre un élastomère, par exemple un élastomère en silicone RTV (acronyme anglais de Room Température Vulcanizing pour vulcanisable à température ambiante).

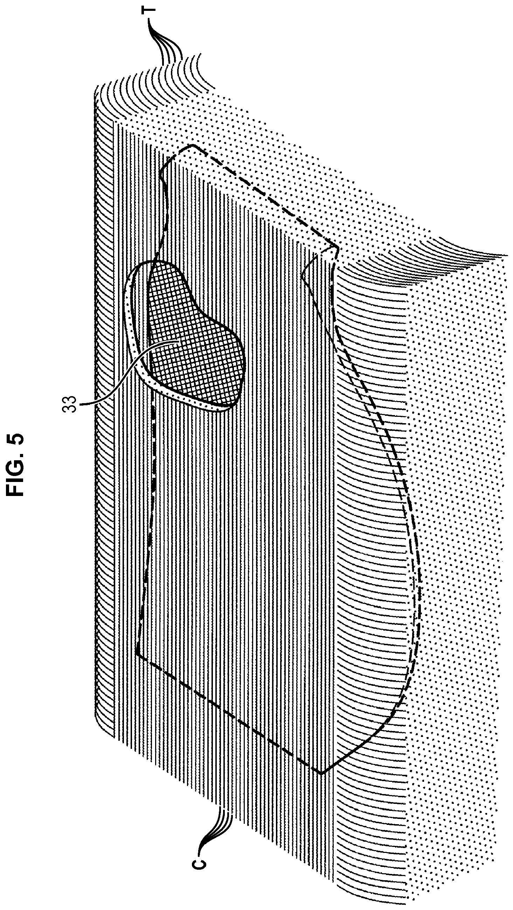

Les figures 5 à 9 illustrent des étapes d'un procédé de fabrication S d'une aube de soufflante 7 conforme à un mode de réalisation possible de l'invention.

Selon une première étape S1 (figure 5), le renfort fibreux 33 est réalisé par tissage tridimensionnel sur un métier à tisser de type jacquard. Lors du tissage, des faisceaux de fils de chaine C (ou torons de chaine) sont disposés en plusieurs couches de plusieurs centaines de fils chacune. Des fils de trame T (ou torons de trame) sont entrelacés avec les fils de chaine C de manière à lier les différentes couches de fils de chaines C entre elles.

Dans l'exemple illustré, le tissage tridimensionnel est un tissage à armure « interlock ». Par « interlock », on désigne une armure de tissage dans laquelle chaque couche de fils de trame lie plusieurs couches de fils de chaine avec tous les fils d'une même colonne de trame ayant le même mouvement dans le plan de l'armure.

D'autres types de tissages tridimensionnels connus peuvent être utilisés, comme notamment ceux décrits dans le document WO 2006/136755.

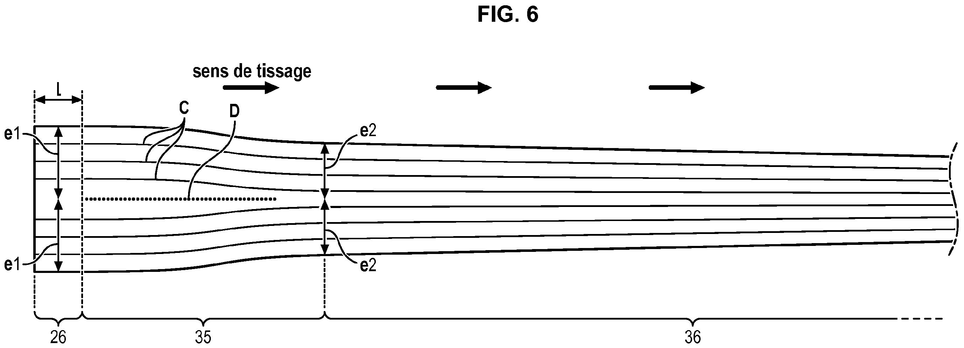

Comme illustré sur la figure 6, l'étape de tissage du renfort fibreux 33 brut (ou préforme) comprend successivement le tissage d'une portion de renfort fibreux provisoire 26(qui sera chutée plus tard au cours du procédé de fabrication), le tissage des deux portions de renfort fibreux de pied d'aube 35 destinées à former les portions 23, puis le tissage d'une portion de renfort fibreux de pale 36 destinée à former le reste de la partie de pied d'aube 22.

La portion de renfort fibreux provisoire 26 est tissée en entrelaçant tous les torons de chaine C nécessaires à la réalisation du renfort fibreux 33. Une fois que la colonne de trame a atteint une largeur l prédéterminée, une déliaison D est initiée entre deux couches successives de fils de chaine C. Puis, les deux portions de renfort fibreux de pied d'aube 35 sont tissées en parallèle l'une de l'autre, en étant séparées par la zone de déliaison D. Ensuite, la déliaison D est stoppée au niveau de la zone de jonction 24 et la portion de renfort fibreux de pale 36 est tissée.

De cette manière, chacune des deux portions de renfort de pied d'aube 35 comprend des fils de chaine C qui se prolongent à l'intérieur de la portion de renfort fibreux de pale 36.

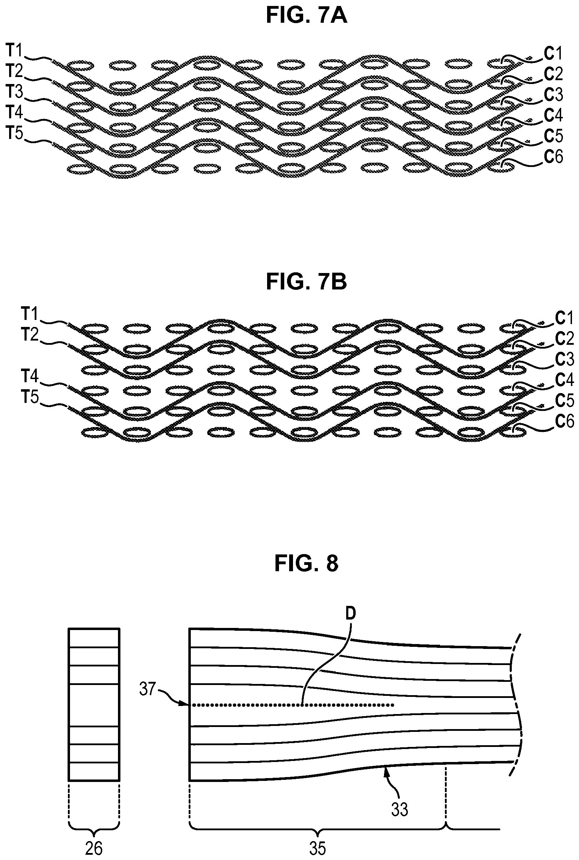

La figure 7A est une vue schématique agrandie, en coupe transversale d'une pluralité de couches de fils de chaine C1 à C6, dans une partie du renfort fibreux ne comprenant pas de déliaison. Dans cet exemple, le renfort fibreux comprend six couches de fils de chaine C1 à C6 s'étendant selon une direction transversale au plan de coupe. Les couches de fils de chaine C1 à C6 sont liées entre elles par cinq couches de fils de trames T1 à T5 s'étendant dans le plan de coupe (ou plan d'armure).

La figure 7B est une vue schématique agrandie, en coupe transversale d'une pluralité de couches de fils de chaine C1 à C6, dans une partie du renfort fibreux incluant une déliaison. Les trois couches de fils de chaine C1 à C3 sont liées entre elles par deux couches de fils de trame T1 et T2, tandis que les trois couches de fils de chaine C4 à C6 sont liées entre elles par deux couches de fils de trame T4 et T5. Comme cela est visible sur la figure 7B, deux couches de fils de chaines adjacentes C3 et C4 ne sont pas liées entre elles par des fils de trame, de sorte qu'une déliaison est formée dans le renfort fibreux.

Dans une forme de réalisation, comme cela est visible sur la figure 6, chaque portion de renfort fibreux de pied d'aube 35 peut être tissée avec des torons de trame successifs T qui présentent des titrages différents, qui décroissent dans le sens du tissage (sens de tissage indiqué par la flèche), c'est-à-dire des titrages qui décroissent à mesure que l'on se rapproche de la portion de renfort fibreux de pale 36.

On rappelle que le « titrage » désigne une grandeur caractérisant la finesse d'un fil : il est défini comme la masse du fil par unité de longueur. L'unité normalisée pour mesurer le titrage est le Tex (masse en grammes de 1000 mètres de fil) ou le Décitex (masse en grammes de 10 000 mètres de fil). D'autres unités peuvent être également utilisées telles que le denier, le numéro métrique ou encore le numéro anglais.

De cette manière, les portions de renfort fibreux de pied d'aube 35 présentent chacune une épaisseur e qui décroit en se rapprochant de la portion de renfort fibreux de pale 36. Chaque portion de renfort fibreux de pied d'aube présente une épaisseur e1 en pied d'aube, et une épaisseur e2 à la jonction avec la portion de renfort fibreux de pale 36, inférieure à e1.

Cette forme de réalisation n'est cependant pas limitative, les portions de renfort fibreux de pied d'aube 35 pouvant présenter une épaisseur constante.

Au fur et à mesure du tissage du renfort fibreux 33 dont l'épaisseur et la largeur peuvent varier, un certain nombre de fils de chaine C ne sont pas tissés, ce qui permet de définir un contour, une largeur et une épaisseur voulus continument variables, du renfort fibreux 33.

Les fils de chaine C et les fils de trame T situés à la limite de la masse tissé (appelés « flottés ») sont également découpés, de manière à extraire le renfort fibreux 33 (figure 8).

Ensuite, le renfort fibreux fini est obtenu en réalisant un détourage (« contouring ») de la préforme. Le détourage désigne la découpe de la préforme à plat le long du bord d'attaque, du bord de fuite, de la tête (en laissant des sur-longueurs sur ces trois découpes). Un détourage est également réalisé le long de la veine inférieure et sur les faces latérales de la partie de pied d'aube.

En outre, la portion de renfort fibreux provisoire 26 est découpée afin d'être éliminée, de sorte que la déliaison D forme une ouverture débouchante 37 entre les deux portions de renfort de pied d'aube 35. Le détourage et la découpe de la portion de pied d'aube peuvent être réalisés au jet d'eau sous pression.

Selon une deuxième étape S2, la pièce d'attache 9 est réalisée, par exemple par usinage, afin de former la cavité, la première ouverture, la deuxième ouverture 30, l'épaulement 10 et le cas échéant un filet au niveau de la deuxième ouverture 30 pour permettre le vissage du couvercle 31.

Selon une troisième étape S3, l'embase 18 est insérée dans la pièce d'attache 9 par la deuxième ouverture 30 et placée en butée contre l'épaulement 10.

Selon une quatrième étape S4, les portions de renfort fibreux de pied d'aube 35 sont insérées dans la cavité de la pièce d'attache 9 à travers le passage 39 de l'embase 18 via la première ouverture de la pièce d'attache 9. Une fois les portions de renfort fibreux de pied d'aube 35 insérées dans la cavité, elles s'étendent à l'intérieur de la cavité de la pièce d'attache 9 en passant à travers le passage 39 de l'embase 18 tandis que la portion de renfort fibreux de pale 36 s'étend à l'extérieur de la pièce d'attache 9.

Selon une cinquième étape S5, la pièce de blocage 19 est insérée à travers la deuxième ouverture 30 entre les deux portions de renfort fibreux de pied d'aube 35 de sorte à séparer les deux portions 35 l'une de l'autre.

Selon une sixième étape S6, les extrémités des portions de renfort de pied d'aube 35 sont placées soit contre la face inférieure 38b du support, soit sous la pièce de blocage 19, puis le couvercle 31 est fixé sur la pièce d'attache 9 de sorte à bloquer les deux portions de renfort de pied d'aube 35 et à maintenir la pièce de blocage 19 en appui contre lesdites portions. En particulier, le couvercle 31 est fixé de telle sorte qu'il exerce sur les portions de renfort de pied d'aube 35 une force de compression tendant à enfoncer la pièce de blocage 19 entre les deux portions vers la partie de pale 21 à profil aérodynamique et à les plaquer contre les flancs du support. Ce montage permet de garantir que les deux portions de renfort de pied d'aube 35 restent écartées l'une de l'autre afin de résister par effet géométrique aux efforts centrifuges s'exerçant sur l'aube 7 lors du fonctionnement du moteur.

Selon une septième étape S7, la mousse 40 expansive est injectée de sorte à remplir la cavité de la face supérieure 38a du support jusqu'à la première ouverture, puis densifiée par polymérisation.

On notera que, dans une variante de réalisation, cette étale d'injection et de densification de la mousse 40 expansive peut également être réalisée préalablement à l'étape d'insertion de l'embase 18. Dans ce cas, au cours de la deuxième étape S2, la pièce d'attache 9 est préusinée de sorte à réaliser un renfoncement dont les contours correspondent globalement à la portion de la cavité qui s'étend entre l'épaulement 10 et la première ouverture. La mousse 40 expansive est ensuite injectée dans ce renfoncement et densifiée, puis la pièce d'attache 9 et la mousse 40 expansive sont usinées de sorte à obtenir le reste de la cavité, la première ouverture, la deuxième ouverture 30, l'épaulement 10 et le cas échéant le filet au niveau de la deuxième ouverture 30 pour permettre le vissage du couvercle 31. Le reste des étapes S3 à S6 est ensuite inchangé.

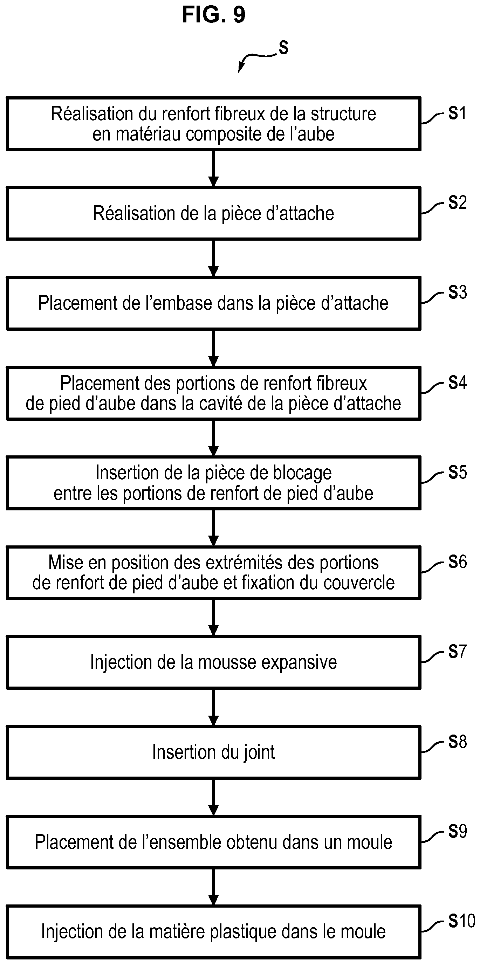

Selon une huitième étape S8, le joint 20 est inséré dans la première ouverture
Selon une neuvième étape S9 (figure 9), l'ensemble obtenu, comprenant le renfort fibreux 33, la pièce d'attache 9, la mousse 40 expansive, l'embase 18, la pièce de blocage 19, le joint 20 et le couvercle 31, est placé dans un moule (non représenté) présentant une cavité ayant la forme de la pièce finale moulée (à savoir l'aube de soufflante 7).

Selon une dixième étape S10, de la matière plastique (appelée « matrice »), est injectée dans le moule par le ou les trou(s) 32 formé(s) dans le couvercle 31 de manière à imprégner tout le renfort fibreux 33. L'injection de matière plastique peut être réalisée par une technique d'injection du type RTM ou VARTM. La matière plastique injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant.

De manière connue en soi, la matière plastique est chauffée de manière à provoquer une polymérisation de la matière plastique, par exemple par réticulation. A cet effet, le moule est placé dans une étuve. La pièce obtenue est ensuite démoulée puis détourée par usinage du bord d'attaque, du bord de fuite et de la tête de pale afin d'obtenir une pièce présentant la forme désirée. La partie inférieure de l'aube est également usinée.

Le renfort 33 imprégné de matière plastique constituant la matrice 34 forme la structure en matériau composite 17 de l'aube 7.

## Revendications

1. Aube (7) comprenant :
- une structure en matériau composite (17) comprenant un renfort fibreux (33) obtenu par tissage tridimensionnel et une matrice (34) dans laquelle est noyé le renfort fibreux (33), la structure en matériau composite (17) comprenant une partie de pale (21) à profil aérodynamique et une partie de pied d'aube (22), la partie de pied d'aube (22) comprenant deux portions (23) reliées chacune à la partie de pale (21),
- une pièce d'attache de pied d'aube (9) comprenant une paroi délimitant une cavité et une ouverture formée dans la paroi, la structure en matériau composite (17) s'étendant à travers l'ouverture de telle sorte que la partie de pale (21) est située à l'extérieur de la pièce d'attache (9) et la partie de pied d'aube (22) est située à l'intérieur de la cavité, la pièce d'attache de pied d'aube (9) comprenant en outre un épaulement (10), s'étendant dans la cavité depuis la paroi
- une embase (18) disposée dans la cavité, ladite embase (18) comprenant un support configuré pour venir en butée contre l'épaulement (10) de la pièce d'attache de pied d'aube (9) et un passage (39) formé dans le support, les portions (23) de la partie de pied d'aube (22) de la structure en matériau composite s'étendant à travers le passage (39), et
- une pièce de blocage (19) disposée dans la cavité entre les deux portions (23) de la partie de pied d'aube (22), de sorte que chaque portion de la partie de pied d'aube (23) se trouve plaquée par la pièce de blocage (19) contre le support.

2. Aube selon la revendication 1, comprenant en outre une mousse expansive (40) disposée dans la cavité entre l'embase (18) et l'ouverture.

3. Aube selon l'une des revendications 1 ou 2, dans laquelle une extrémité (23a) de chacune des portions (23) de la partie de pied d'aube (22) est repliée sous la pièce de blocage (19) ou placée contre une face inférieure de l'embase (18).

4. Aube selon la revendication 3, comprenant en outre un couvercle (31) appliqué contre les extrémités (23a) des portions (23) de la partie de pied d'aube (22) et configuré pour être fixé sur la pièce d'attache (9) de sorte à bloquer lesdites portions (23) et la pièce de blocage (19).

5. Aube selon l'une des revendications 1 à 4, dans laquelle le renfort fibreux (33) comprend une portion de renfort fibreux de pale (36) et deux portions de renfort fibreux de pied d'aube (35), et dans laquelle les portions de renfort fibreux de pied d'aube (35) sont chacune tissées de manière continue avec la portion de renfort fibreux de pale (36), les deux portions de renfort fibreux de pied d'aube (35) étant séparées par une zone de déliaison (D) obtenue lors du tissage tridimensionnel du renfort fibreux (33).

6. Aube selon l'une des revendications 1 à 5, dans laquelle des flancs du support qui délimitent le passage (39) sont inclinés de sorte que le passage (39) est divergeant dans la direction d'une deuxième ouverture (30) de la pièce d'attache (9), la deuxième ouverture (30) étant située sous la partie de pied d'aube (22), d'un côté opposé de la pièce d'attache (9) par rapport à l'ouverture (28).

7. Procédé de fabrication d'une aube (7) selon l'une des revendications 1 à 6 à partir d'un renfort fibreux (33) obtenu par tissage tridimensionnel (S1), le renfort fibreux (33) comprenant une portion de renfort fibreux de pale (36) et deux portions de renfort fibreux de pied d'aube (35), le procédé comprenant des étapes de :
S2 : réalisation de la pièce d'attache de pied d'aube (9) de sorte à former la cavité et l'épaulement (10),
S3 : placement de l'embase (18) dans la pièce d'attache (9) contre l'épaulement (10),
S4 : placement du renfort fibreux (33) dans la pièce d'attache de pied d'aube (9) à travers l'ouverture de telle sorte que la portion de renfort fibreux de pale (36) est située à l'extérieur de la pièce d'attache (9) et les deux portions de renfort fibreux de pied d'aube (35) sont situées à l'intérieur de la cavité,
S5 : insertion de la pièce de blocage (19) dans la cavité entre les deux portions de renfort de pied d'aube (35), de sorte que chaque portion de la partie de pied d'aube (23) se trouve plaquée par la pièce de blocage (19) contre le support,
S9 : placement du renfort fibreux (33), de la pièce d'attache (9), de l'embase (18) et de la pièce de blocage (19) dans un moule,
S10 : injection de matière plastique dans le moule de manière à former la structure en matériau composite (17) comprenant le renfort fibreux (33) et une matrice (34) dans laquelle est noyé le renfort fibreux (33).

8. Procédé selon la revendication 7, comprenant en outre, préalablement à l'étape S10 d'injection de matière plastique, une étape S7 d'injection d'une mousse expansive (40) dans la cavité entre l'épaulement et l'ouverture.

9. Procédé selon l'une des revendications 7 ou 8, comprenant en outre, après l'étape S5 d'insertion de la pièce de blocage (19), une étape S6 de mise en position d'une extrémité (23a) des portions de renfort fibreux de pied d'aube (35) sous la pièce de blocage (19) ou contre une face inférieure (38b) de l'embase (18) et de fixation d'un couvercle (31) contre lesdites extrémités (23) pour maintenir la pièce de blocage (19) en appui contre les deux portions de renfort fibreux de pied d'aube (35).

10. Moteur à turbine à gaz (1) comprenant une soufflante, la soufflante comprenant un moyeu (6) et des aubes (7) s'étendant radialement à partir du moyeu (6), les aubes (7) étant conformes à l'une des revendications 1 à 6, chaque aube (7) étant montée rotative par rapport au moyeu (6) autour d'un axe de calage (Y) respectif, le moteur (1) comprenant en outre un mécanisme d'actionnement (8) propre à être commandé pour faire tourner les aubes (7) autour de leurs axes de calage (Y) de manière à modifier l'angle de calage des aubes (7).

11. Aéronef comprenant un moteur à turbine à gaz (1) selon la revendication 10.

## Patentansprüche

1. Schaufel (7), die Folgendes umfasst:
- eine Verbundmaterialstruktur (17), die eine durch dreidimensionales Weben erhaltene Faserverstärkung (33) und eine Matrix (34) umfasst, in die die Faserverstärkung (33) eingebettet ist, wobei die Verbundmaterialstruktur (17) einen Blattteil (21) mit aerodynamischen Profil und einen Schaufelfußteil (22) umfasst, wobei der Schaufelfußteil (22) zwei Abschnitte (23) umfasst, die jeweils mit dem Blattteil (21) verbunden sind;
- ein Schaufelfuß-Befestigungselement (9), das eine Wand, die einen Hohlraum begrenzt, und eine Öffnung, die in der Wand ausgebildet ist, umfasst, wobei sich die Verbundmaterialstruktur (17) derart durch die Öffnung erstreckt, dass der Schaufelteil (21) sich außerhalb des Befestigungselements (9) befindet und der Schaufelfußteil (22) sich im Inneren des Hohlraums befindet, wobei das Schaufelfuß-Befestigungselement (9) ferner eine Schulter (10) umfasst, die sich von der Wand in den Hohlraum erstreckt;
- eine Basis (18), die im Hohlraum angeordnet ist, wobei die Basis (18) einen Träger, der so angeordnet ist, dass er an der Schulter (10) des Schaufelfuß-Befestigungselements (9) anliegt, und einen im Träger ausgebildeten Durchgang (39) umfasst, wobei sich die Abschnitte (23) des Schaufelfußteils (22) der Verbundmaterialstruktur durch den Durchgang (39) erstrecken, und
- ein Verriegelungselement (19), das derart im Hohlraum zwischen den beiden Abschnitten (23) des Schaufelfußteils (22) angeordnet ist, dass jeder Abschnitt des Schaufelfußteils (23) durch das Verriegelungselement (19) gegen den Träger gedrückt wird.

2. Schaufel nach Anspruch 1, die ferner einen expandierenden Schaum (40) umfasst, der in dem Hohlraum zwischen der Basis (18) und der Öffnung angeordnet ist.

3. Schaufel nach Anspruch 1 oder 2, wobei ein Ende (23a) jedes der Abschnitte (23) des Schaufelfußteils (22) unter dem Verriegelungselement (19) gefaltet oder an einer Unterseite der Basis (18) platziert ist.

4. Schaufel nach Anspruch 3, die ferner eine Abdeckung (31) umfasst, die auf dem Ende (23a) der Abschnitte (23) des Schaufelfußteils (22) aufliegt und so konfiguriert ist, dass sie derart am Befestigungselement (9) fixiert wird, um die Abschnitte (23) und das Verriegelungselement (19) zu verriegeln.

5. Schaufel nach einem der Ansprüche 1 bis 4, wobei die Faserverstärkung (33) einen Blattfaserverstärkungsabschnitt (36) und zwei Schaufelfuß-Faserverstärkungsabschnitte (35) umfasst, und wobei die Schaufelfuß-Faserverstärkungsabschnitte (35) jeweils durchgehend mit den Blattfaserverstärkungsabschnitten (36) verwoben sind, wobei die beiden Schaufelfuß-Faserverstärkungsabschnitte (35) durch eine Trennungszone (D) getrennt sind, die beim dreidimensionalen Weben der Faserverstärkung (33) erhalten wird.

6. Schaufel nach einem der Ansprüche 1 bis 5, wobei die Seiten des Trägers, die den Durchgang (39) begrenzen, derart geneigt sind, dass der Durchgang (39) in der Richtung einer zweiten Öffnung (30) des Befestigungselements (9) divergent ist, wobei die zweite Öffnung (30) sich in Bezug auf die Öffnung (28) unterhalb des Schaufelfußteils (22) auf einer Seite gegenüber dem Befestigungsteil (9) befindet.

7. Verfahren zum Herstellen einer Schaufel (7) nach einem der Ansprüche 1 bis 6 aus einer Faserverstärkung (33), die durch dreidimensionales Weben (S1) erhalten wird, wobei die Faserverstärkung (33) einen Blattfaserverstärkungsabschnitt (36) und zwei Schaufelfuß-Faserverstärkungsabschnitte (35) umfasst, wobei das Verfahren die folgenden Schritte umfasst:
S2: Herstellen des Schaufelfuß-Befestigungselements (9), um den Hohlraum und die Schulter (10) zu bilden;
S3: Platzieren der Basis (18) im Befestigungselement (9) gegen die Schulter (10);
S4: Platzieren der Faserverstärkung (33) durch die Öffnung im Schaufelfuß-Befestigungsteil (9), so dass sich der Blattfaserverstärkungsabschnitt (36) außerhalb des Befestigungselements (9) befindet und die beiden Schaufelfuß-Faserverstärkungsabschnitte (35) sich innerhalb des Hohlraums befinden,
S5: Einsetzen des Verriegelungselements (19) in den Hohlraum zwischen den beiden Schaufelfußverstärkungsabschnitten (35), so dass jeder Abschnitt des Schaufelfußteils (23) durch das Verriegelungselement (19) gegen den Träger gedrückt wird;
S9: Platzieren der Faserverstärkung (33), des Befestigungselements (9), der Basis (18) und des Verriegelungselements (19) in einer Form;
S10: Einspritzen von Kunststoff in die Form, um die Verbundmaterialstruktur (17) zu bilden, die die Faserverstärkung (33) und eine Matrix (34) umfasst, in die die Faserverstärkung (33) eingebettet ist.

8. Verfahren nach Anspruch 7, ferner umfassend einen Schritt S7 des Einspritzens von expandierendem Schaum (40) in den Hohlraum zwischen der Schulter und der Öffnung vor dem Schritt S10 des Einspritzens von Kunststoff.

9. Verfahren nach Anspruch 7 oder 8, ferner umfassend einen Schritt S6 des Positionierens eines Endes (23a) der Schaufelfuß-Faserverstärkungsabschnitte (35) unterhalb des Verriegelungselements (19) oder gegen die Unterseite (38b) der Basis (18) und des Fixierens einer Abdeckung (31) an den Enden (23), um das Verriegelungselement (19) an den beiden Schaufelfuß-Faserverstärkungsabschnitten (35) anliegen zu lassen, nach dem Schritt S5 des Einsetzens des Verriegelungselements (19).

10. Gasturbinentriebwerk (1), umfassend ein Gebläse, wobei das Gebläse eine Nabe (6) und sich radial von der Nabe (6) erstreckende Schaufeln (7) umfasst, wobei die Schaufeln (7) einem der Ansprüche 1 bis 6 entsprechen, wobei jede Schaufel (7) in Bezug auf die Nabe (6) um eine jeweilige Keilachse (Y) drehbar montiert ist, wobei der Motor (1) ferner einen Betätigungsmechanismus (8) umfasst, der so gesteuert werden kann, dass er die Schaufeln (7) um ihre Keilachsen (Y) dreht, um den Keilwinkel der Schaufeln (7) einzustellen.

11. Flugzeug, umfassend ein Gasturbinentriebwerk (1) nach Anspruch 10.

## Claims

1. Blade (7) comprising :
- a composite material structure (17) comprising a fibrous reinforcement (33) obtained by three-dimensional weaving and a matrix (34) in which the fibrous reinforcement (33) is embedded, the composite material structure (17) comprising a blade part (21) with an aerodynamic profile and a blade root part (22), the blade root part (22) comprising two portions (23) each connected to the blade part (21),
- a blade root attachment part (9) comprising a wall defining a cavity and an aperture formed in the wall, the composite material structure (17) extending through the aperture such that the blade part (21) is located outside the attachment part (9) and the blade root part (22) is located inside the cavity, the blade root attachment part (9) further comprising a shoulder (10), extending into the cavity from the wall
- a base (18) disposed in the cavity, said base (18) comprising a support configured to abut the shoulder (10) of the blade root attachment part (9) and a passage (39) formed in the support, the portions (23) of the blade root part (22) of the composite structure extending through the passage (39), and
- a locking piece (19) disposed in the cavity between the two portions (23) of the blade root part (22), so that each portion of the blade root part (23) is pressed by the locking piece (19) against the support.

2. Blade according to claim 1, further comprising an expanding foam (40) disposed in the cavity between the base (18) and the opening.

3. Blade according to one of claims 1 or 2, in which one end (23a) of each of the portions (23) of the blade root part (22) is folded under the locking piece (19) or placed against a lower face of the base (18).

4. Blade according to claim 3, further comprising a cover (31) applied against the ends (23a) of the portions (23) of the blade root part (22) and configured to be fixed to the attachment part (9) so as to block said portions (23) and the blocking part (19).

5. A blade according to any one of claims 1 to 4, wherein the fibre reinforcement (33) comprises a blade fibre reinforcement portion (36) and two root fibre reinforcement portions (35), and in which the blade root fibrous reinforcement portions (35) are each woven continuously with the blade fibrous reinforcement portion (36), the two blade root fibrous reinforcement portions (35) being separated by a debonding zone (D) obtained during the three-dimensional weaving of the fibrous reinforcement (33).

6. Blade according to one of claims 1 to 5, in which flanks of the support which delimit the passage (39) are inclined so that the passage (39) diverges in the direction of a second opening (30) in the attachment part (9), the second opening (30) being located under the blade root part (22), on an opposite side of the attachment part (9) to the opening (28).

7. Method of manufacturing a blade (7) according to one of claims 1 to 6 from a fibrous reinforcement (33) obtained by three-dimensional weaving (S1), the fibrous reinforcement (33) comprising a portion of blade fibrous reinforcement (36) and two portions of blade root fibrous reinforcement (35), the method comprising the steps of:
S2: making the blade root attachment part (9) so as to form the cavity and the shoulder (10),
S3: placing the base (18) in the attachment part (9) against the shoulder (10),
S4: placing the fibre reinforcement (33) in the blade root attachment part (9) through the opening so that the blade fibre reinforcement portion (36) is located outside the attachment part (9) and the two blade root fibre reinforcement portions (35) are located inside the cavity,
S5: inserting the locking piece (19) into the cavity between the two blade root reinforcement portions (35), so that each portion of the blade root part (23) is pressed against the support by the locking piece (19),
S9: placing the fibre reinforcement (33), the attachment part (9), the base (18) and the locking part (19) in a mould,
S10: injecting plastic material into the mould so as to form the composite material structure (17) comprising the fibrous reinforcement (33) and a matrix (34) in which the fibrous reinforcement (33) is embedded.

8. Method according to claim 7, further comprising, prior to the plastic injection step S10, a step S7 of injecting an expanding foam (40) into the cavity between the shoulder and the opening.

9. Method according to one of claims 7 or 8, further comprising, after the step S5 of inserting the locking part (19), a step S6 of positioning one end (23a) of the blade root fibre reinforcement portions (35) under the locking part (19) or against a lower face (38b) of the base (18) and fixing a cover (31) against said ends (23) to hold the locking part (19) in abutment against the two blade root fibre reinforcement portions (35).

10. A gas turbine engine (1) comprising a fan, the fan comprising a hub (6) and blades (7) extending radially from the hub (6), the blades (7) being in accordance with any one of claims 1 to 6, each blade (7) being rotatably mounted relative to the hub (6) about a respective pitch axis (Y), the engine (1) further comprising an actuating mechanism (8) operable to be controlled to rotate the blades (7) about their pitch axes (Y) so as to change the pitch angle of the blades (7).

11. Aircraft comprising a gas turbine engine (1) according to claim 10.
